# EUROPEAN PATENT APPLICATION

(11) **EP 4 759 168 A1**
(43) Date of publication of application: **17.06.2026**
(21) Application number: 24852164.3
(22) Date of filing: 30.07.2024
(51) Int. Cl.: A24F 40/95, A24F 40/40, A24F 40/48, A24F 40/46, A24F 40/42, A24F 40/50, A24F 40/57

(54) **AEROSOL-GENERATING DEVICE**

(30) Priority: 09.08.2023 KR 20230104350; 16.10.2023 KR 20230137984
(71) Applicant: KT&G Corporation, Daedeok-gu Daejeon 34337 (KR)
(72) Inventor: JANG, Chul Ho, Bucheon-si, Gyeonggi-do 14725 (KR); KIM, Jae Hyuk, Seoul 06352 (KR); PARK, Sang Cheol, Suwon-si, Gyeonggi-do 16469 (KR); SEO, Jang Won, Daejeon 34023 (KR); WOO, Young Min, Hwaseong-si, Gyeonggi-do 18391 (KR); LEE, Won Kyeong, Guri-si, Gyeonggi-do 11920 (KR); JUNG, Jin Chul, Daejeon 34079 (KR); HAN, Dae Nam, Seoul 06331 (KR)
(74) Representative: Ter Meer Steinmeister & Partner
(86) International application number: PCT/KR2024/011096
(87) International publication number: WO 2025/033808

(57) **Abstract**

An aerosol-generating device includes a body including an accommodation space for accommodating an aerosol-generating article, a heater configured to heat the aerosol-generating article accommodated in the accommodation space, a battery that moves in a direction to be inserted into the body while rotating with respect to the body and is detachably coupled to the body, and an airflow passage through which air moves along a space between the body and the battery coupled to the body.

## Description

### Technical Field

Various embodiments of the present disclosure relate to an aerosol-generating device, and more particularly, to an aerosol-generating device having a structure capable of stably coupling a battery.

### Background Art

Recently, the demand for alternative methods for overcoming the shortcomings of general cigarettes has increased. For example, there is an increasing demand for a system for generating aerosols by heating a cigarette or an aerosol-generating material by using an aerosol-generating device, rather than by burning cigarettes. Accordingly, research on heating-type aerosol-generating devices has been actively conducted.

As interest in environmental issues increases worldwide, environmental friendliness and safety are demanded throughout the entire life cycle of batteries, from production to recycling. Accordingly, in the field of aerosol-generating devices, research on detachable batteries has been newly conducted while promoting the development of related technologies, such as reuse and recycling of batteries.

### Disclosure of Invention

### Technical Problem

Embodiments provide an aerosol-generating device having a structure capable of stably coupling a battery.

Also, embodiments provide an aerosol-generating device using a coupling space of a battery as an airflow passage.

The technical problems of the present disclosure are not limited to the above-described description, and other technical problems may be clearly understood by one of ordinary skill in the art from the embodiments to be described hereinafter.

### Solution to Problem

An aerosol-generating device according to an embodiment may include a body including an accommodation space for accommodating an aerosol-generating article, a heater configured to heat the aerosol-generating article accommodated in the accommodation space, a battery that moves in a direction to be inserted into the body while rotating with respect to the body and is detachably coupled to the body, and an airflow passage through which air moves along a space between the body and the battery coupled to the body.

### Advantageous Effects of Invention

According to an aerosol-generating device of embodiments, a battery can be stably coupled simply by inserting the battery through rotation.

According to an aerosol-generating device of embodiments, it may not be required to arrange a separate airflow passage.

Effects of the present disclosure are not limited to the above effects, and effects that are not mentioned could be clearly understood by one of ordinary skill in the art from the present specification and the attached drawings.

### Brief Description of Drawings

FIGS. 1A to 1C are diagrams showing examples of an aerosol-generating device according to an embodiment.
FIG. 2 is a perspective view schematically showing an aerosol-generating device according to an embodiment of the present disclosure.
FIG. 3A is a perspective view of a battery applicable to the aerosol-generating device of FIG. 2.
FIG. 3B is a cross-sectional view of the battery of FIG. 3A taken along line III-III of FIG. 3A.
FIG. 4 is a cross-sectional view showing an example in which a battery is coupled to a body applicable to the aerosol-generating device of FIG. 2.
FIGS. 5A and 5B are each a cross-sectional view showing an example in which a battery is coupled to a body applicable to an aerosol-generating device according to another embodiment.
FIG. 6 is a diagram schematically showing an airflow passage applicable to the aerosol-generating device of FIG. 2.
FIG. 7 is a perspective view showing a rear end portion of a battery applicable to an aerosol-generating device according to another embodiment.
FIG. 8 is a cross-sectional view showing a battery and a cover coupled to a body applicable to an aerosol-generating device according to another embodiment.
FIG. 9 is a block diagram of an aerosol-generating device according to another embodiment of the disclosure.

### Mode for the Invention

Hereinafter, embodiments will be described in detail with reference to the accompanying drawings, and the same or similar components will be assigned the same reference numerals regardless of the reference numerals in the drawings, and the same descriptions thereof will be omitted.

Terms such as "...unit" and "... module," are used in the following description in consideration of only ease of drafting of the specification, and thus do not have distinct meanings or roles in themselves.

In the description of embodiments of the disclosure, certain detailed explanations of the related art are omitted when it is deemed that they may unnecessarily obscure the essences of embodiments of the disclosure. In addition, the accompanying drawings are only intended to facilitate understanding of the embodiments described herein, and the spirit of the disclosure is not limited by the accompanying drawings and should be understood to include all changes, equivalents or alternatives included in the spirit and scope of the disclosure.

While such terms as "first", "second", etc., may be used to describe various components, such components must not be limited to the above terms. The above terms are used only to distinguish one component from another.

When an element is referred to as being "connected to" or "coupled to" another element, it may be directly connected or coupled to the other element or intervening elements may be present. In contrast, when an element is referred to as being "directly connected to" or "directly coupled to" another element, there are no intervening elements present.

An expression used in the singular encompasses the expression of the plural, unless it has a clearly different meaning in the context.

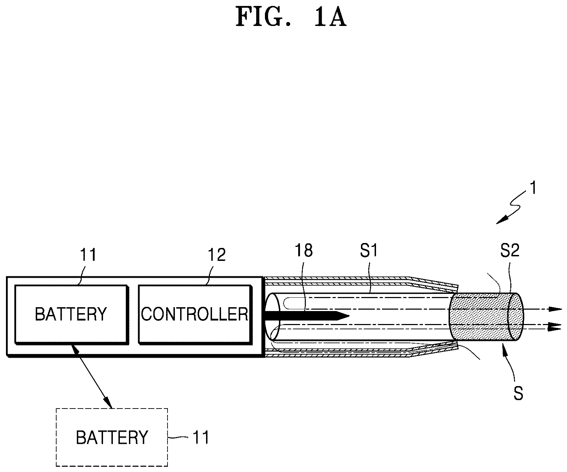

FIGS. 1A to 1C are diagrams showing examples of an aerosol-generating device according to an embodiment.

FIGS. 1A to 1C illustrate examples in which a cigarette (hereinafter, this term may be used interchangeably with the terms 'aerosol-generating article' or 'stick') is inserted into an aerosol-generating device.

Referring to FIGS. 1A to 1C, an aerosol-generating device 1 may include a battery 11, a controller 12, a heater 18, and a cartridge 19.

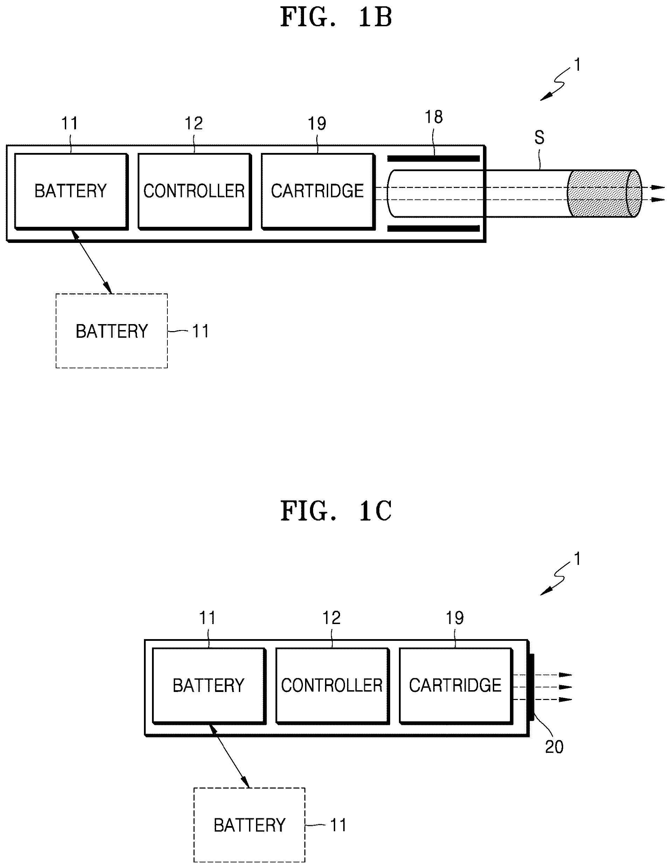

Referring to FIG. 1A, the aerosol-generating device 1 includes the battery 11, the controller 12, and the heater 18. Referring to FIG. 1B, the aerosol-generating device 1 further includes the cartridge 19. An aerosol-generating article S may be inserted into an internal space of the aerosol-generating device 1.

When the aerosol-generating article S is inserted into the aerosol-generating device 1, the aerosol-generating device 1 may generate an aerosol by operating the heater 18 and/or the cartridge 19. The aerosol generated by the heater 18 and/or the cartridge 19 passes through the aerosol-generating article S and is delivered to a user. If necessary, the aerosol-generating device 1 may heat the heater 18 even when the aerosol-generating article S is not inserted into the aerosol-generating device 1.

The heater 18 may be omitted. Referring to FIG. 1C, the aerosol-generating device 1 includes the battery 11, the controller 12, and the cartridge 19. The aerosol-generating device 1 of FIG. 1C does not have a space into which the aerosol-generating article S may be inserted, and the heater 18 for heating the aerosol-generating article S is not arranged in the aerosol-generating device 1 of FIG. 1C.

In the aerosol-generating device 1 of FIGS. 1A to 1C, components related to the present embodiment are illustrated. Therefore, it may be understood by those skilled in the art related to the present embodiment that, in addition to the components illustrated in FIGS. 1A to 1C, other general components may be further included in the aerosol-generating device 1.

In FIGS. 1A to 1C, components of the aerosol-generating device 1 of are shown as being arranged in a row. However, the internal structure of the aerosol-generating device 1 is not limited to that illustrated in FIGS. 1A to 1C. For example, the cartridge 19 and the heater 18 may be arranged in parallel. In other words, depending on the design of the aerosol-generating device 1, the arrangement of the battery 11, the controller 12, the heater 18, and the cartridge 19 may be changed.

The battery 11 supplies power used to operate the aerosol-generating device 1. For example, the battery 11 may supply power so that the heater 18 or the cartridge 19 may be heated, and may supply power required for the controller 12 to operate. In addition, the battery 11 may supply power required for a display, a sensor, a motor, etc. installed in the aerosol-generating device 1 to operate.

The battery 11 may be a removable type (detachable or separable) power source. The battery 11 includes an electrical contact portion, and when the battery 11 is mounted in the aerosol-generating device 1, the electrical contact portion of the battery 11 may be implemented to be electrically connected to an electrical contact portion provided in the aerosol-generating device 1 to supply power to the aerosol-generating device 1. As another example, the battery 11 may include a charging coil for supplying power to the aerosol-generating device 1 in a wireless charging manner instead of a separate electrical contact portion. That is, the power supply method of the battery 11 may vary, and the electrical connection method of the battery 11 and the aerosol-generating device 1 may vary depending on the power supply method supported by the battery 11.

The detachable battery 11 may include a charger interface that may be connected to an external charger. Power for charging the detachable battery 11 may be provided to the battery 11 through the charger interface. The battery 11 may be charged by the external charger while being coupled to the aerosol-generating device 1 or while being separated from the aerosol-generating device 1.

The controller 12 controls all operations of the aerosol-generating device 1. Specifically, the controller 12 controls the operations of the battery 11, the heater 18, and the cartridge 19, as well as other components included in the aerosol-generating device 1. In addition, the controller 12 may check the status of each of the components of the aerosol-generating device 1 to determine whether the aerosol-generating device 1 is in an operable state.

The controller 12 includes at least one processor. The processor may be implemented as an array of a plurality of logic gates, or may be implemented as a combination of a general-purpose microprocessor and a memory storing a program that may be executed by the microprocessor. It will also be understood by those skilled in the art that the processor may be implemented in other forms of hardware.

The heater 18 may be heated by power supplied from the battery 11. For example, when a cigarette is inserted into the aerosol-generating device 1, the heater 18 may be located outside the cigarette. Therefore, the heated heater 18 may increase the temperature of an aerosol-generating material inside the cigarette.

The heater 18 may be an electrical resistance heater. For example, the heater 18 may include an electrically conductive track, and the heater 18 may be heated as current flows through the electrically conductive track. However, the heater 18 is not limited to the above-described example and may be applied without limitation as long as it may be heated to a desired temperature. Here, the desired temperature may be preset in the aerosol-generating device 1, or may be set to a desired temperature by the user.

Meanwhile, as another example, the heater 18 may be an induction heating heater. Specifically, the aerosol-generating device 1 may include an induction coil (not shown) surrounding the heater 18. When power is supplied to the induction coil by the battery 11, the induction coil may heat the heater 18. The heater 18 may be a susceptor and may be heated by a magnetic field generated by an AC current flowing through the induction coil. The magnetic field may pass through the heater 18 and generate an eddy current within the heater 18. The current may generate heat in the heater 18.

Meanwhile, the cigarette may include a susceptor that may be heated by an induction heating heater. The susceptor may be included inside the cigarette, and the susceptor inside the cigarette may be heated by a magnetic field generated by an AC current flowing through the induction coil.

In FIGS. 1A and 1B, the heater 18 is illustrated as being arranged outside the aerosol-generating article S, but is not limited thereto. The heater 18 may include a tubular heating element, a plate-shaped heating element, a needle-shaped heating element, or a rod-shaped heating element, and may heat the interior or exterior of the aerosol-generating article S depending on the shape of the heating element.

In addition, a plurality of heaters 18 may be arranged in the aerosol-generating device 1. In this case, the plurality of heaters 18 may be arranged to be inserted into the interior of the aerosol-generating article S or may be arranged on the exterior of the aerosol-generating article S. In addition, some of the plurality of heaters 18 may be arranged to be inserted into the interior of the aerosol-generating article S, and the rest may be arranged on the exterior of the aerosol-generating article S. In addition, the shape of the heater 18 is not limited to the shape shown in FIGS. 1A and 1B, and may be manufactured in various shapes.

The cartridge 19 may heat a liquid composition to generate an aerosol, and the generated aerosol may be delivered to the user by passing through the aerosol-generating article S.

In other words, the aerosol generated by the cartridge 19 may move along an airflow passage of the aerosol-generating device 1. In FIGS. 1A and 1B, the aerosol moving along the airflow passage may be delivered to the user through the aerosol-generating article S. In FIG. 1C, the aerosol moving along the airflow passage may be delivered to the user through a mouthpiece 20.

The cartridge 19 may include, but is not limited to, a liquid storage, a liquid delivery element, and a cartridge heater. For example, the liquid storage, the liquid delivery element, and the cartridge heater may be included in the aerosol-generating device 1 as independent modules.

The liquid storage may store a liquid composition. For example, the liquid composition may be a liquid including a tobacco-containing material including a volatile tobacco flavoring component, or a liquid including a non-tobacco material. The liquid storage may be manufactured to be detachable/attachable from/to the cartridge 19, or may be manufactured integrally with the cartridge 19.

For example, the liquid composition may include water, a solvent, ethanol, a plant extract, flavoring, a flavoring agent, or a vitamin mixture. The flavoring may include, but is not limited to, menthol, peppermint, spearmint oil, various fruit flavoring ingredients, etc. The flavoring agent may include ingredients that may provide various flavors or tastes to the user. The vitamin mixture may include, but is not limited to, a mixture of at least one of vitamin A, vitamin B, vitamin C, and vitamin E. In addition, the liquid composition may include an aerosol-forming agent, such as glycerin and propylene glycol.

The liquid delivery element may deliver the liquid composition of the liquid storage to the heating element. For example, the liquid delivery element may be, but is not limited to, a wick such as cotton fiber, ceramic fiber, glass fiber, or porous ceramic.

The cartridge heater is an element for heating the liquid composition delivered by the liquid delivery element. The cartridge heater may be, but is not limited to, a metal heating wire, a metal heating plate, a ceramic heater, or the like, and may include various types for generating an aerosol from an aerosol-generating material.

As an example, the cartridge heater may be composed of a conductive filament such as a nichrome wire and may have a structure that is wound around the liquid delivery element. The cartridge heater may be heated by a current supply, and may transfer heat to the liquid composition in contact with the cartridge heater, thereby heating the liquid composition. As a result, an aerosol may be generated.

As another example, the cartridge heater may be composed of a susceptor material that is heated by an induced magnetic field, and may be heated by an induced magnetic field generated by an induction coil that is arranged separately from the heating element.

As another example, the cartridge heater may be an ultrasonic vibrator that generates an aerosol from an aerosol-generating material by using an ultrasonic vibration method. The ultrasonic vibration method may refer to a method of generating an aerosol by atomizing an aerosol-generating material by ultrasonic vibration generated by the vibrator.

The cartridge heater may be permanently or reversibly attached to the liquid delivery element by applying, spraying, depositing, plating, immersing, painting, printing, 3D printing, using a device, etc., as well as coupling according to structural features, such as being wound on the liquid delivery element, and may be arranged on the liquid delivery element. In addition, the cartridge heater may be arranged on the liquid delivery element by sintering the cartridge heater together during the process of manufacturing the liquid delivery element. However, the arrangement of the cartridge heater is not limited to the examples described above, and may include various methods in which the cartridge heater may be arranged on the liquid delivery element while maintaining the function of the cartridge heater.

The cartridge heater may be referred to as a cartomizer or an atomizer, but is not limited thereto.

The cartridge 19 may be inserted into and detached from the main body of the aerosol-generating device 1 or the aerosol-generating device 1. When the aerosol-generating material stored in the cartridge 19 is completely consumed, the aerosol-generating material may be newly replenished in the cartridge 19 or the cartridge 19 may be replaced with another cartridge 19 in which the aerosol-generating material is stored.

Meanwhile, the aerosol-generating device 1 may further include general-purpose components in addition to the battery 11, the controller 12, the heater 18, and the cartridge 19. For example, the aerosol-generating device 1 may include a display capable of outputting visual information and/or a motor for outputting tactile information. In addition, the aerosol-generating device 1 may include at least one sensor (a puff detection sensor, a temperature detection sensor, a cigarette insertion detection sensor, etc.). In addition, the aerosol-generating device 1 may have a structure in which outside air may be introduced or internal gas may be discharged even when the aerosol-generating article S is inserted into the aerosol-generating device 1.

Although not shown in FIGS. 1A to 1C, the aerosol-generating device 1 may also be configured as a system with a separate cradle. For example, the cradle may be used to charge the battery 11 of the aerosol-generating device 1. Alternatively, the heater 18 may be heated while the cradle and the aerosol-generating device 1 are coupled to each other.

The aerosol-generating article S may be similar to a typical combustion-type cigarette. For example, the aerosol-generating article S may be divided into a first part S1 including an aerosol-generating material and a second part S2 including a filter, etc. The first part S1 may be referred to as a 'medium part' hereinafter.

The second part S2 of the aerosol-generating article S may also include an aerosol-generating material. For example, an aerosol-generating material made in the form of granules or capsules may be inserted into the second part S2.

The entire first part S1 may be inserted into the interior of the aerosol-generating device 1, and the second part S2 may be exposed to the outside. Alternatively, only a portion of the first part S1 may be inserted into the interior of the aerosol-generating device 1, or the entire first part S1 and a portion of the second part S2 may be inserted into the interior of the aerosol-generating device 1. The user may inhale the aerosol while holding the second part S2 in his/her mouth. In this case, the aerosol is generated as outside air passes through the first part S1, and the generated aerosol passes through the second part S2 and is delivered to the user's mouth.

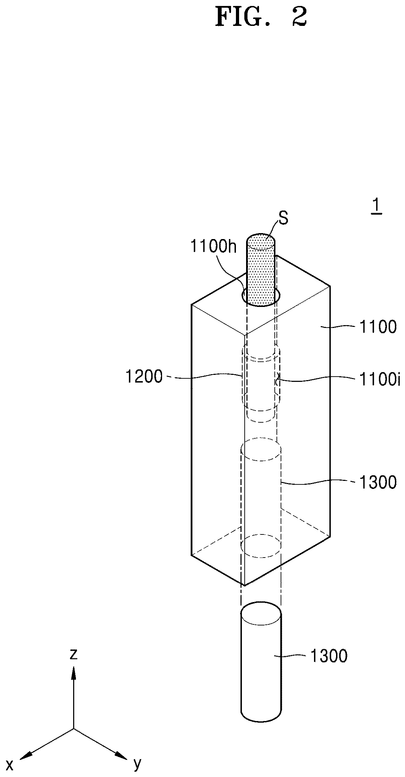

FIG. 2 is a perspective view schematically showing an aerosol-generating device according to an embodiment of the present disclosure.

Referring to FIG. 2, the aerosol-generating device 1 according to an embodiment may include a body 1100, a heater 1200, and a battery 1300.

The body 1100 may form an overall exterior of the aerosol-generating device 1 and include an internal space where components of the aerosol-generating device 1 may be arranged. In drawings, illustrated is only an embodiment in which an overall cross-section of the body 1100 has a rectangular column shape, but a shape of the body 1100 is not limited thereto. The body 1100 may have an overall cylindrical shape or a polygonal column shape.

The body 1100 may include an opening 1100h through which the aerosol-generating article S may be inserted into the body 1100. At least a portion of the aerosol-generating article S may be inserted into or accommodated inside the body 1100 through the opening 1100h.

The body 1100 may include an accommodation space 1100i accommodating the aerosol-generating article S therein. The accommodation space 1100i may be provided in an upper portion the body 1100. The accommodation space 1100i may be opened upward to be connected to the opening 1100h.

The accommodation space 1100i may have a cylindrical shape extending vertically. At least a portion of the aerosol-generating article S may be accommodated inside the body 1100 through the opening 1100h above the accommodation space 1100i. Here, a depth of the accommodation space 1100i may correspond to a depth of a region of the aerosol-generating article S including an aerosol-generating material or medium.

The heater 1200 (e.g.: the heater 18 of FIGS. 1A and 1B) may generate aerosols from the aerosol-generating article S accommodated in the accommodation space 1100i. The heater 1200 may extend vertically along the accommodation space 1100i.

According to an embodiment, the heater 1200 may surround at least a portion of the accommodation space 1100i. For example, the heater 1200 may be a cylindrical electrical resistance heater surrounding at least a portion of the accommodation space 1100i. In another example, the heater 1200 may include a cylindrical susceptor surrounding at least a portion of the accommodation space 1100i and an induction coil surrounding the susceptor. The heater 1200 may heat the outside of the aerosol-generating article S accommodated in the accommodation space 1100i. However, an embodiment is not limited by a shape and arrangement of the heater 1200. According to another embodiment, the heater 1200 may be inserted into the aerosol-generating article S.

At least one region of the aerosol-generating article S accommodated in the accommodation space 1100i may be heated by the heater 1200, and the aerosols may be generated when vaporized particles generated by heating the aerosol-generating article S are mixed with air introduced to the internal space of the body 1100 through an air inlet hole (e.g.: the opening 1100h) provided in one region of the body 1100.

The heater 1200 may be a cartridge heater of FIGS. 1B and 1C. In this case, the aerosol-generating article S may be the cartridge 19 of FIGS. 1B and 1C rather than a cigarette or a stick.

The aerosol-generating device 1 according to an embodiment may include the battery 1300 supplying power used by the aerosol-generating device 1 to operate. Here, the battery 1300 may be the battery 11 of FIGS. 1A to 1C.

Referring to FIG. 2, the battery 1300 may be detachably coupled to the body 1100. For example, the battery 1300 may be coupled to one region of the body 1100 by being inserted into the body 1100 in a +z direction from a location spaced apart from the body 1100 in a -z direction. In detail, the battery 1300 may be coupled to the body 1100 by moving in a direction (e.g.: the +z direction) to be inserted into the body 1100 while rotating with respect to the body 1100. Hereinafter, a method by which the battery 1300 is coupled may be referred to as "screw coupling".

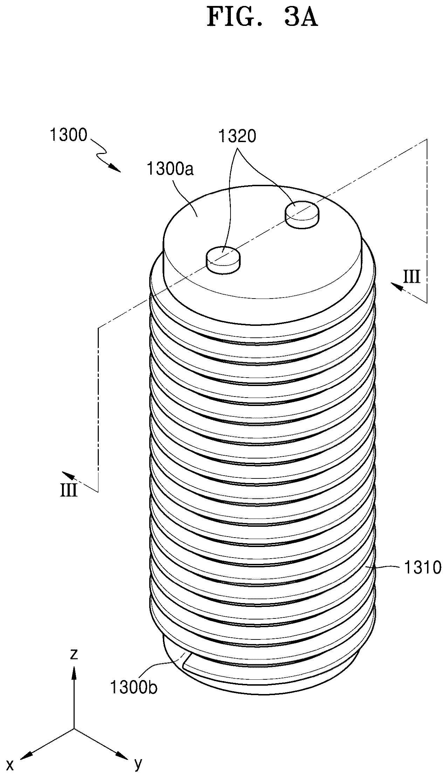

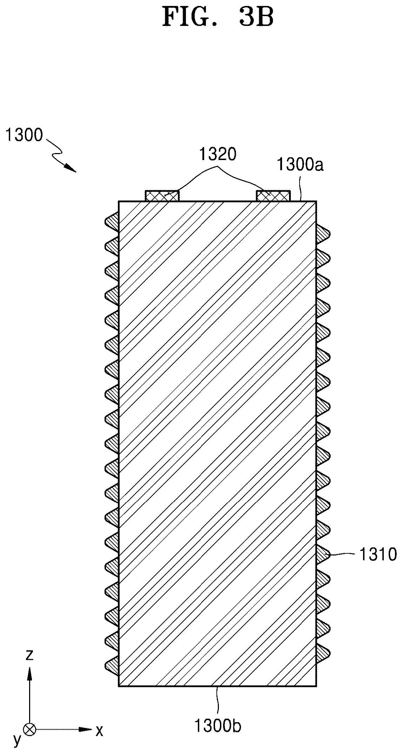

Hereinafter, a structure of the battery 1300 for the body 1100 to be coupled will be described in detail with reference to FIGS. 3A and 3B.

FIG. 3A is a perspective view of a battery applicable to the aerosol-generating device of FIG. 2. FIG. 3B is a cross-sectional view of the battery of FIG. 3A taken along line III-III of FIG. 3A.

Referring to FIGS. 3A and 3B, the battery 1300 may be the same as or similar to the battery 11 of FIGS. 1A to 1C or the battery 1300 of FIG. 2.

The battery 1300 may include a cylindrical shape as shown in FIG. 3A but is not limited thereto, and may include various shapes to be coupled to a body while rotating with respect to the body. Also, in FIG. 3A, the battery 1300 is cylindrical on an xy plane and extends in a z-axis direction, but a specification of the battery 1300 is not limited thereto.

The battery 1300 may include a protruding portion 1310 protruding from an outer surface of the battery 1300 to be detachably coupled to the body (e.g.: the body 1100 of FIG. 2). The protruding portion 1310 is a component used for coupling to the body.

The protruding portion 1310 may include a shape extending in a length direction of the battery 1300 (e.g.: the z-axis direction) while surrounding the outer surface of the battery 1300. Here, the number of times the protruding portion 1310 surrounds the battery 1300 is not limited that illustrated in the drawings.

The protruding portion 1310 may be inserted into a guide groove formed on an inner surface of the body according to screw coupling of the battery 1300 to the body and supported by one region of the body facing the guide groove. When the protruding portion 1310 is supported by the guide groove, the battery 1300 may be supported by the body.

One end portion of the battery 1300 inserted into the body may be referred to as a front end portion 1300a of the battery 1300, and the other end portion of the battery 1300 facing an opposite direction may be referred to as a rear end portion 1300b of the battery 1300.

A supply terminal 1320 configured to supply power to components inside the body 1100 may be arranged in the front end portion 1300a of the battery 1300. According to the drawings, there are two supply terminals 1320, but an embodiment is not limited by the number of supply terminals. The rear end portion 1300b of the battery 1300 may face the outside of the body 1100. The rear end portion 1300b may be inserted into the body 1100 or exposed outside the body 1100.

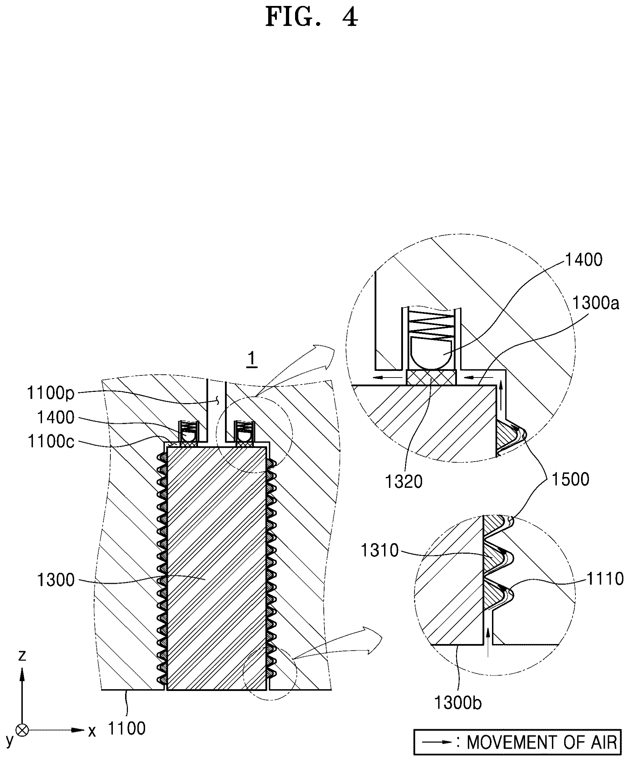

FIG. 4 is a cross-sectional view showing an example in which a battery is coupled to a body applicable to the aerosol-generating device of FIG. 2.

Referring to FIG. 4, the aerosol-generating device 1 according to an embodiment may include the body 1100, the battery 1300, a receiving terminal 1400, and an airflow passage 1500.

At least one of components of the aerosol-generating device 1 shown in FIG. 4 may be the same as or similar to at least one of the components of the aerosol-generating device 1 of FIG. 2 and the battery 1300 of FIG. 3A, and thus, redundant descriptions are not provided below.

The body 1100 may include a coupling space 1100c to be coupled to a battery, separately from an accommodation space (e.g.: the accommodation space 1100i of FIG. 2). The coupling space 1100c of the body 1100 may be opened in a -z direction such that a detachable battery may be inserted into the coupling space 1100c.

The coupling space 1100c may include a shape corresponding to a shape of a battery. For example, the coupling space 1100c may have a circular shape on an xy plane and may include a cylindrical groove extending in the z-axis direction.

The receiving terminal 1400 protruding towards the coupling space 1100c may be arranged on a bottom surface of the coupling space 1100c. The supply terminal 1320 arranged on the front end portion 1300a of the battery 1300 may come into contact with the receiving terminal 1400 when the battery 1300 moves in the length direction of the battery 1300 while rotating with respect to the body 1100. Accordingly, power may be supplied to the internal components of the aerosol-generating device 1.

When the battery 1300 is inserted into the coupling space 1100c, the receiving terminal 1400 may be arranged at a location of the battery 1300 corresponding to the supply terminal 1320. For example, there are two receiving terminals 1400 in FIG. 4, which are arranged in the periphery of a connecting passage 1100p described below, but an embodiment is not limited by the number and locations of the receiving terminals 1400.

The body 1100 may include a guide groove 1110 extending along a rotating direction of the battery 1300 and inclined towards the length direction (e.g.: the z-axis direction) of the battery 1300 for the protruding portion 1310 to be inserted therein. In other words, the protruding portion 1310 and the guide groove 1110 may include corresponding shapes to be engaged with each other. As described above, the battery 1300 may be screw-coupled to the body 1100 when the protruding portion 1310 is inserted into the guide groove 1110 and moves along the guide groove 1110.

Here, a space between the body 1100 and the battery 1300 coupled to the body 1100 may provide the airflow passage 1500 through which air moves. The volume of the protruding portion 1310 may be smaller than the volume of the guide groove 1110 to secure the space between the battery 1300 and the body 1100, which are screw-coupled to each other. Referring to FIG. 4, the area of the protruding portion 1310 may be smaller than the area of the guide groove 1110 in a cross-sectional view of the battery 1300 in the length direction.

Accordingly, a space extending in the length direction (e.g.: the z-axis direction) of the battery 1300 while surrounding the outer surface of the battery 1300 may be provided between the protruding portion 1310 and the guide groove 1110, and such a space may be the airflow passage 1500 to which air outside the aerosol-generating device 1 is introduced.

The airflow passage 1500 may start from an entrance of the coupling space 1100c where the rear end portion 1300b of the battery 1300 is arranged. A gap between the outer surface of the battery 1300 and the inner surface of the body 1100 forming the coupling space 1100c may be a start point of the airflow passage 1500.

Air that moved along the space between the protruding portion 1310 and the guide groove 1110 may reach a bottom surface of the coupling space 1100c. The body 1100 may include the connecting passage 1100p connected to the accommodation space 1100i from the bottom surface of the coupling space 1100c. Accordingly, the air that has reached the bottom surface of the coupling space 1100c may move along the connecting passage 1100p opened at the center of the bottom surface. A location of the connecting passage 1100p is not limited thereto.

Locations of the protruding portion 1310 and the guide groove 1110 may be switched. Referring to FIG. 4, the protruding portion 1310 is arranged on the outer surface of the battery 1300 and the guide groove 1110 is arranged on the inner surface of the body 1100 forming the coupling space 1100c, but according to an embodiment, the protruding portion 1310 may be arranged on the inner surface of the body 1100 and the guide groove 1110 may be arranged on the outer surface of the battery 1300.

One of ordinary skill in the art would easily understand that the protruding portion 1310 may be arranged on any one of the battery 1300 and the body 1100 and the guide groove 1110 may be arranged on the other one of the battery 1300 and the body 1100.

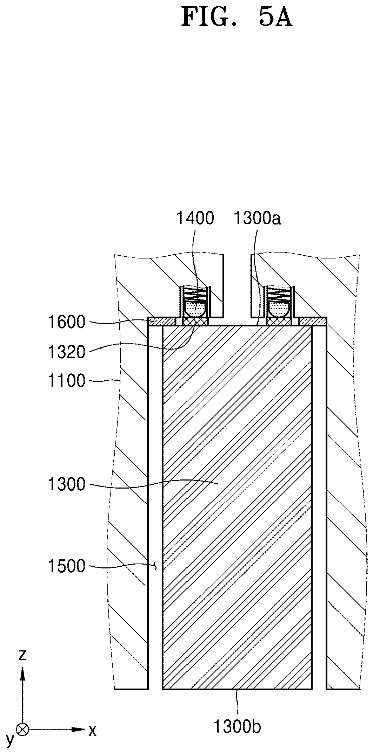

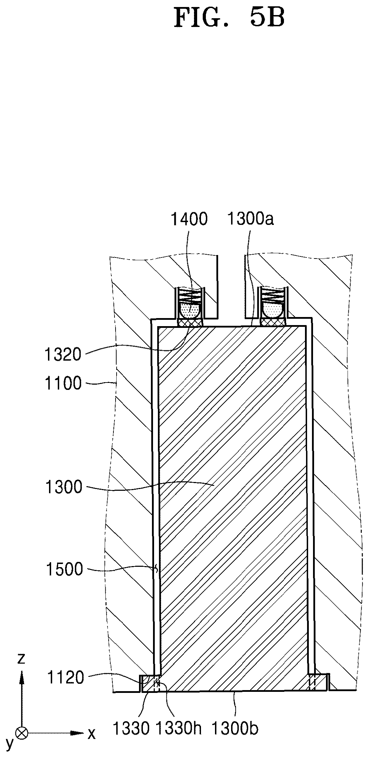

Hereinafter, a configuration for stopping movement of the battery 1300 to the body 1100 will be described with reference to FIGS. 5A and 5B.

FIGS. 5A and 5B are each a cross-sectional view showing an example in which a battery is coupled to a body applicable to an aerosol-generating device according to embodiments.

Referring to FIGS. 5A and 5B, the aerosol-generating device 1 according to embodiments may include the body 1100, the battery 1300, the receiving terminal 1400, and the airflow passage 1500.

At least one of the components of the aerosol-generating device 1 shown in FIGS. 5A and 5B may be the same as or similar to the aerosol-generating device 1 of FIG. 4, and redundant descriptions are omitted below.

Referring to FIG. 5A, the aerosol-generating device 1 may further include a stopper 1600 restricting a moving range of the protruding portion 1310 while coming into contact with the front end portion 1300a of the battery 1300. The stopper 1600 may be arranged on the inner surface of the body 1100 forming a coupling space (e.g.: the coupling space 1100c of FIG. 4).

When the front end portion 1300a of the battery 1300 reaches the stopper 1600 while the battery 1300 moves in the length direction of the battery 1300 by rotating with respect to the body 1100, the battery 1300 no longer rotates and linearly moves. At this time, the supply terminal 1320 and the receiving terminal 1400 of the battery 1300 may be in contact with each other.

Accordingly, power may be supplied to the internal components of the aerosol-generating device 1 from the battery 1300 when the battery 1300 no longer moves with respect to the body 1100. A user may determine that the battery 1300 has been fully coupled to the coupling space 1100c (e.g.: the supply terminal 1320 and the receiving terminal 1400 are in contact with each other) when the user feels that the battery 1300 no longer rotates and linearly moves with respect to the body 1100.

Referring to FIG. 5B, the battery 1300 may include, at the rear end portion 1300b, a step portion 1330 restricting movement of the battery 1300 with respect to the body 1100. The step portion 1330 may protrude outside the rear end portion 1300b.

In the illustrated embodiment, the body 1100 may include, at the entrance of the coupling space 1100c, a circular groove 1120 into which the step portion 1330 is inserted and extending in the length direction of the coupling space 1100c, to correspond to the step portion 1330. The circular groove 1120 may include a shape corresponding to the step portion 1330. For example, an inner diameter of the circular groove 1120 may be greater than an inner diameter of the coupling space 1100c.

The circular groove 1120 may restrict the step portion 1330 from moving in the length direction of the coupling space 1100c or in the length direction of the battery 1300 (e.g.: the z-axis direction). When the step portion 1330 located at the rear end portion 1300b of the battery 1300 is accommodated in the circular groove 1120 while the battery 1300 rotates with respect to the body 1100 and moves in the length direction of the battery 1300, the circular groove 1120 stops the step portion 1330 from moving in the z-axis direction, and thus, the battery 1300 no longer rotates and linearly moves. At this time, the supply terminal 1320 and the receiving terminal 1400 of the battery 1300 may be in contact with each other.

Accordingly, power may be supplied to the internal components of the aerosol-generating device 1 from the battery 1300 when the battery 1300 no longer moves with respect to the body 1100. The user may determine that the battery 1300 has been fully coupled to the coupling space 1100c (e.g.: the supply terminal 1320 and the receiving terminal 1400 are in contact with each other) when the user feels that the battery 1300 no longer rotates and linearly moves with respect to the body 1100 or visually identifies that the step portion 1330 has been accommodated in the circular groove 1120.

The step portion 1330 protruding from the outer surface of the battery 1300 may cover the airflow passage 1500, and thus, air may not be introduced to the airflow passage 1500. In this regard, the step portion 1330 of the battery 1300 may include an inlet hole 1330h to introduce air outside to the aerosol-generating device 1.

When the battery 1300 includes the inlet hole 1330h penetrating the step portion 1330, air may pass through the step portion 1330 of the battery 1300 and may be introduced into the coupling space 1100c, and then may move along the airflow passage 1500 provided between the battery 1300 and the body 1100.

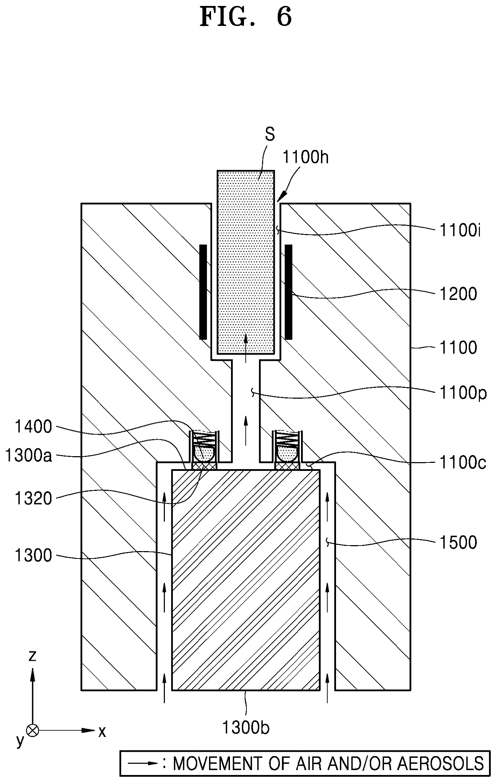

FIG. 6 is a diagram schematically showing an airflow passage applicable to the aerosol-generating device of FIG. 2.

Referring to FIG. 6, the aerosol-generating device 1 according to another embodiment may include the body 1100, the heater 1200, the battery 1300, the receiving terminal 1400, and the airflow passage 1500.

At least one of components of the aerosol-generating device 1 shown in FIG. 6 may be the same as or similar to at least one of the components of the aerosol-generating device 1 of FIGS. 2 and 4, and thus, redundant descriptions are not provided below.

As described above, the airflow passage 1500 may start from the entrance of the coupling space 1100c where the rear end portion 1300b of the battery 1300 is arranged. The gap between the outer surface of the battery 1300 and the inner surface of the body 1100 forming the coupling space 1100c may be the start point of the airflow passage 1500.

Air may move along a space extending in the length direction of the battery 1300 while surrounding the outer surface of the battery 1300. The moved air may reach the bottom surface of the coupling space 1100c. The air may be introduced to the connecting passage 1100p by bypassing a portion where the receiving terminal 1400 and the supply terminal 1320 are arranged.

The air moved along the connecting passage 1100p from the bottom surface of the coupling space 1100c may reach the accommodation space 1100i. The air introduced to an end portion of the aerosol-generating article S accommodated in the accommodation space 1100i may be mixed with vaporized particles generated when the aerosol-generating article S is heated by the heater 1200, thereby forming aerosols.

The aerosols may move along the aerosol-generating article S and may be introduced to the mouth of the user of the aerosol-generating device 1 through the other end portion of the aerosol-generating article S located around the opening 1100h.

In other words, the coupling space 1100c of the battery 1300 may be in fluid communication with the accommodation space 1100i of the aerosol-generating article S through the connecting passage 1100p. Here, "fluid communication" or "fluid connection" may indicate that components are connected so that a fluid, such as air, may flow through the components.

The coupling space 1100c and the accommodation space 1100i may be opened in opposite directions. The airflow passage 1500 may extend along the coupling space 1100c and the accommodation space 1100i from the outside of the aerosol-generating device 1, and thus, the aerosol-generating device 1 may include the airflow passage 1500 with a relatively simple structure. Here, the airflow passage 1500 may not only refer to the space between the battery 1300 and the body 1100, but also refer to a passage allowing the coupling space 1100c, the connecting passage 1100p, and the accommodation space 1100i to be in fluid connection.

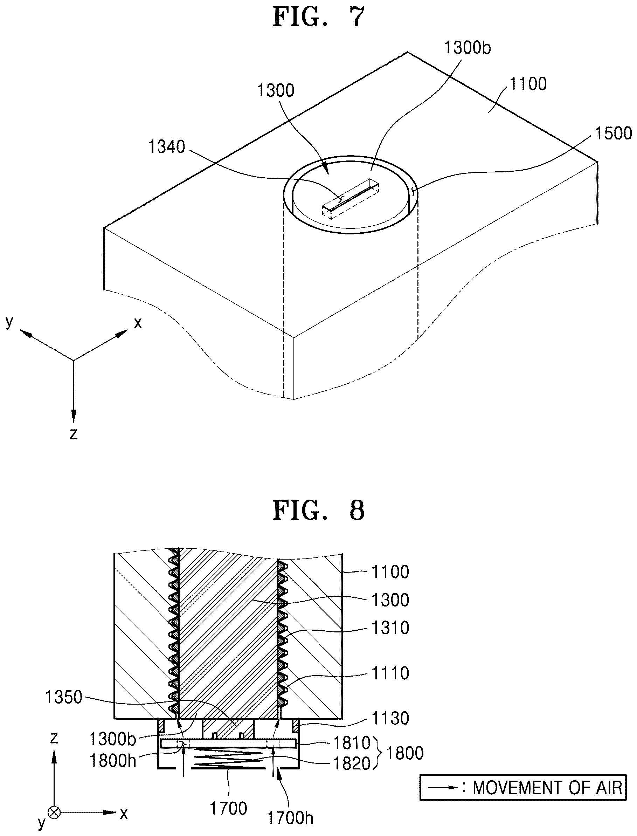

The battery 1300 coupled to the body 1100 may be detached by the user. Hereinafter, a configuration for detaching the battery 1300 will be described with reference to FIGS. 7 and 8.

FIG. 7 is a perspective view showing the rear end portion 1300b of a battery applicable to an aerosol-generating device according to another embodiment.

Referring to FIG. 7, the aerosol-generating device 1 according to another embodiment may include the body 1100 and the battery 1300.

At least one of components of the aerosol-generating device 1 shown in FIG. 7 may be the same as or similar to at least one of the components of the aerosol-generating device 1 of FIGS. 2 and 4, and thus, redundant descriptions are not provided below.

The battery 1300 may include an insertion groove 1340 arranged at one end portion. The insertion groove 1340 is a component arranged at the rear end portion 1300b of the battery 1300 and configured to transfer operating force applied by the user to separate the battery 1300 coupled to the body 1100 from the body 1100.

When the battery 1300 is being inserted into the coupling space 1100c or is being separated from the coupling space 1100c, the user may rotate the battery 1300 without difficulty while holding the outer surface of the battery 1300.

However, when the battery 1300 has been fully inserted into the coupling space 1100c, it is difficult for the user to rotate the battery 1300 because the user is unable to hold the outer surface of the battery 1300. Here, the insertion groove 1340 may be arranged at the rear end portion 1300b of the battery 1300 exposed to the outside of the aerosol-generating device 1. When the user applies the operating force to the insertion groove 1340 to separate the battery 1300, the battery 1300 may move in the length direction of the battery 1300 while rotating in a direction opposite to a "direction rotating to be coupled to the body 1100".

For example, when the battery 1300 rotates clockwise with respect to the body 1100 while moving in the +z direction to be coupled to the body 1100, the battery 1300 may move in the -z direction while rotating counterclockwise with respect to the body 1100 to be separated from the body 1100.

To rotate the battery 1300 through the insertion groove 1340, a general tool available to the user or the user's fingernail may be inserted into the insertion groove 1340. The insertion groove 1340 may be used not only to separate the battery 1300, but also to rotate the battery 1300 to fully couple the battery 1300.

As illustrated, the insertion groove 1340 may include a shape of a groove extending straight on the xy plane, but an embodiment is not limited by a shape of the insertion groove 1340. The insertion groove 1340 may include various shapes capable of rotating and linearly moving the battery 1300 when the user applies the operating force to rotate the battery 1300.

FIG. 8 is a cross-sectional view showing a battery and a cover coupled to a body applicable to an aerosol-generating device according to another embodiment.

Referring to FIG. 8, the aerosol-generating device 1 according to another embodiment may include the body 1100, the battery 1300, and a cover 1700.

At least one of components of the aerosol-generating device 1 shown in FIG. 8 may be the same as or similar to at least one of the components of the aerosol-generating device 1 of FIGS. 2 and 4, and thus, redundant descriptions are not provided below.

The cover 1700 is a component arranged at one end portion (e.g.: the rear end portion 1300b) of the battery 1300 and protecting the battery 1300 coupled to the body 1100. The cover 1700 may also be coupled to the body 1100 to protect the battery 1300.

The body 1100 may include a guide 1130 arranged inside the cover 1700 to be coupled to the cover 1700 and engaged with the cover 1700 for coupling. A method by which the cover 1700 is coupled to the guide 1130 is not limited to a specific embodiment. For example, the guide 1130 may be forcibly fitted to the cover 1700 or the cover 1700 may be forcibly fitted to the guide 1130. In another example, the guide 1130 and the cover 1700 may be screw-coupled to each other. In another example, the guide 1130 and the cover 1700 may be magnetically coupled to each other by using magnets.

The cover 1700 may close the inside of the cover 1700 while surrounding the rear end portion 1300b of the battery 1300 to protect the battery 1300. Accordingly, an entrance between the battery 1300 and the body 1100, where the airflow passage 1500 starts, may be blocked by the cover 1700 and may not be in fluid connection with the outside of the aerosol-generating device 1.

In other words, for the airflow passage 1500 of the aerosol-generating device 1 to normally function, a separate hole for air needs to be arranged in the cover 1700. The cover 1700 may include a first airflow hole 1710 for introduction of external air. Even if the cover 1700 is present, the airflow passage 1500 may be in fluid connection with the outside of the aerosol-generating device 1 by the first airflow hole 1710.

The battery 1300 may include a convex portion 1350 arranged at one end portion. The convex portion 1350 is arranged at the rear end portion 1300b of the battery 1300 and may protrude outside the body 1100 when the battery 1300 is inserted into the body 1100.

Like an insertion groove (e.g.: the insertion groove 1340 of FIG. 7), the convex portion 1350 is a component arranged because it is difficult for the user to hold the outer surface of the battery 1300 and rotate the battery 1300 when the battery 1300 has been fully inserted into the coupling space 1100c.

The convex portion 1350 may extend from the rear end portion 1300b of the battery 1300 and may be exposed to the outside of the aerosol-generating device 1, and the user may rotate the battery 1300 by applying the operating force for separating the battery 1300 while holding the convex portion 1350.

Accordingly, the battery 1300 may move in the length direction of the battery 1300 while rotating in the direction opposite to the "direction rotating to be coupled to the body 1100". Like the insertion groove, the convex portion 1350 may be used not only to separate the battery 1300, but also to rotate the battery 1300 to fully couple the battery 1300.

In this case, the aerosol-generating device 1 may further include a pressing member 1800 pressing the battery 1300 towards the body 1100 by coming into contact with the convex portion 1350. Due to a space between the protruding portion 1310 of the battery 1300 and the guide groove 1110 of the body 1100, the battery 1300 may move in a direction opposite to an insertion direction of the battery 1300.

Accordingly, a receiving terminal (e.g.: the receiving terminal 1400 of FIG. 4) and a supply terminal (e.g.: the supply terminal 1320 of FIG. 4) of the battery 1300 may be no longer in contact with each other. The pressing member 1800 may press the convex portion 1350 of the battery 1300 in the insertion direction of the battery 1300 to prevent power supply from being stopped due to released contact between the two terminals.

In detail, the pressing member 1800 may include a contact portion 1810 including a second airflow hole 1800h for movement of air and coming into contact with the convex portion 1350, and an elastic portion 1820 arranged between the cover 1700 and the contact portion 1810 to press the contact portion 1810 towards the convex portion 1350.

When the cover 1700 is coupled to the body 1100 to surround the convex portion 1350 of the battery 1300, the elastic portion 1820 of the pressing member 1800 may be compressed between the cover 1700 and the contact portion 1810. Because the cover 1700 is supported and fixed by the body 1100, the elastic portion 1820 applies an elastic force to the contact portion 1810 connected to another end based on the cover 1700 connected to one end, and thus, the contact portion 1810 may press the convex portion 1350.

The contact portion 1810 may include one or more protrusions. The convex portion 1350 of the battery 1300 includes a groove for accommodating the protrusion of the contact portion 1810, and thus, the protrusion of the contact portion 1810 may be inserted into the groove of the convex portion 1350. Accordingly, the protruding portion 1310 may not move and may be supported by the contact portion 1810. Such a protrusion and a groove may prevent the protruding portion 1310 from being separated from the body 1100 by moving in a direction opposite to a coupling direction along the guide groove 1110.

According to the aerosol-generating device 1 of embodiments, the battery 1300 may be stably coupled through screw coupling by simply inserting the battery 1300 into the body 1100 through rotation.

Also, according to the aerosol-generating device 1 of embodiments, the space between the battery 1300 and the body 1100 may be used as the airflow passage 1500, and thus, a separate airflow passage may not be required.

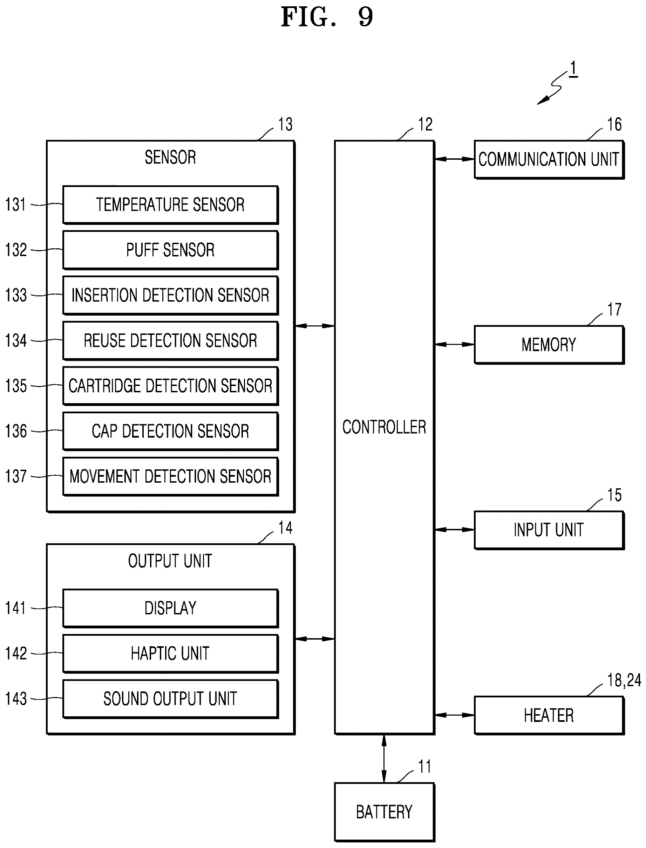

FIG. 9 is a block diagram of an aerosol-generating device according to another embodiment of the present disclosure.

An aerosol-generating device 1 may include a power source 11, a controller 12, a sensor 13, an output unit 14, an input unit 15, a communication unit 16, a memory 17, and one or more heaters 18 or 24. However, an internal structure of the aerosol-generating device 1 is not limited to the illustration of FIG. 9. That is, it may be understood by those skilled in the art that some of the components shown in FIG. 9 may be omitted or new components may be added, according to the design of the aerosol-generating device 1.

The sensor 13 may sense a state of the aerosol-generating device 1 or a state of the surroundings of the aerosol-generating device 1 and may transmit information corresponding to the sensed state to the controller 12. The controller 12 may control the aerosol-generating device 1 so that various functions, such as operation control of the cartridge heater 24 and/or the heater 18, smoking restrictions, determination as to whether the stick S and/or the cartridge 19 is inserted, and an alarm display, may be performed, based on the information corresponding to the sensed state.

The sensor 13 may include at least one of a temperature sensor 131, a puff sensor 132, an insertion detection sensor 133, a reuse detection sensor 134, a cartridge detection sensor 135, a cap detection sensor 136, and a movement detection sensor 137.

The temperature sensor 131 may detect a temperature at which the cartridge heater 24 and/or the heater 18 is heated. The aerosol-generating device 1 may include a separate temperature sensor for detecting the temperature of the cartridge heater 24 and/or the heater 18, or the cartridge heater 24 and/or the heater 18 may serve as a temperature sensor.

The temperature sensor 131 may output a signal corresponding to the cartridge heater 24 and/or the heater 18. For example, the temperature sensor 131 may include a resistor element of which resistance value changes according to a change in the temperature of the cartridge heater 24 and/or the heater 18. The temperature sensor 131 may be implemented by a thermistor, etc. which is an element using a property in which resistance changes according to a temperature. In this case, the temperature sensor 131 may output a signal corresponding to the resistance value of the resistor element as a signal corresponding to the temperature of the cartridge heater 24 and/or the heater 18. For example, the temperature sensor 131 may include a sensor for detecting the resistance value of the cartridge heater 24 and/or the heater 18. In this case, the temperature sensor 131 may output the signal corresponding to the resistance value of the cartridge heater 24 and/or the heater 18 as a signal corresponding to the temperature of the cartridge heater 24 and/or the heater 18.

The temperature sensor 131 may be disposed around the battery 11 to monitor a temperature of the battery 11. The temperature sensor 131 may be disposed adjacent to the battery 11. For example, the temperature sensor 131 may be attached to one surface of a power source, which is the battery 11. For example, the temperature sensor 131 may be mounted on one surface of a printed circuit board.

The temperature sensor 131 may be disposed inside the body 10 to detect an internal temperature of the body 10.

The puff sensor 132 may detect the user's puff, based on various physical changes in an airflow path. The puff sensor 132 may output a signal corresponding to the puff. For example, the puff sensor 132 may be a pressure sensor. The puff sensor 132 may output a signal corresponding to internal pressure of the aerosol-generating device. The internal pressure of the aerosol-generating device 1 may correspond to pressure of the airflow path on which gas flows. The puff sensor 132 may be disposed to correspond to the airflow path on which gas flows, in the aerosol-generating device 1.

The insertion detection sensor 133 may detect insertion and/or removal of the stick S. The insertion detection sensor 133 may detect signal changes relating to insertion and/or removal of the stick S. The insertion detection sensor 133 may be installed around an insertion space. The insertion detection sensor 133 may detect insertion and/or removal of the stick S according to changes in dielectric constants inside the insertion space. For example, the insertion detection sensor 133 may be an inductive sensor and/or a capacitance sensor.

The inductive sensor may include at least one coil. The coil of the inductive sensor may be disposed adjacent to the insertion space. For example, when a magnetic field changes around a coil through which a current flows, the characteristics of the current flowing through the coil may be changed according to the Faraday's law. The characteristics of the current flowing through the coil may include a frequency of an alternating current, a current value, a voltage value, an inductance value, an impedance value, etc.

The inductive sensor may output signals corresponding to the characteristics of the current flowing through the coil. For example, the inductive sensor may output signals corresponding to the inductance value of the coil.

The capacitance sensor may include a conductor. The conductor of the capacitance sensor may be disposed adjacent to the insertion space. The capacitance sensor may output a signal corresponding to an electromagnetic characteristic of the surroundings, for example, an electrostatic capacitance around the conductor. For example, when the stick S including a wrapper made of a metal material is inserted into the insertion space, the electromagnetic properties around the conductor may be changed by the wrapper of the stick S.

The reuse detection sensor 134 may detect whether the stick S is reused. The reuse detection sensor 134 may be a color sensor. The color sensor may detect a color of the stick S. The color sensor may detect a color of a portion of the wrapper surrounding the outside of the stick S. The color sensor may detect values for optical characteristics corresponding to the color of an object, based on light reflected by the object. For example, the optical characteristics may be a wavelength of the light. The color sensor may be implemented as a single component with the proximity sensor, or may be implemented as a separate component distinct from the proximity sensor.

A color of at least a portion of the wrapper that constitutes the stick S may be changed by aerosol. In case where the stick S is inserted into the insertion space, the reuse detection sensor 134 may be disposed to correspond to a location in which at least a portion of the wrapper of which color is changed by aerosol. For example, before the stick S is used by the user, the color of at least the portion of the wrapper may be a first color. In this case, as at least a portion of the wrapper is wet by aerosol generated by the aerosol-generating device 1 while the aerosol is passing through the stick S, the color of the at least a portion of the wrapper may be changed to a second color. The color of the at least a portion of the wrapper may be maintained as the second color after being changed from the first color to the second color.

The cartridge detection sensor 135 may detect insertion and/or removal of the cartridge 19. The cartridge detection sensor 135 may be implemented by an inductance-based sensor, a capacitive sensor, a resistance sensor, a hall sensor (hall IC) using a hall effect, etc.

The cap detection sensor 136 may detect mounting and/or removal of a cap. When the cap is separated from the body 10, a portion of the cartridge 19 and the body 10 covered by the cap may be exposed to the outside. The cap detection sensor 136 may be implemented by a contact sensor, a hall sensor (hall IC), an optical sensor, etc.

The movement detection sensor 137 may detect a movement of the aerosol-generating device. The movement detection sensor 137 may be implemented with at least one of an acceleration sensor and a gyro sensor.

The sensor 13 may further include at least one of a humidity sensor, a barometric pressure sensor, a magnetic sensor, a global positioning sensor (GPS), and a proximity sensor, in addition to the above-described sensors 131 through 137. Functions of the sensors would be instinctively understood by one of ordinary skill in the art in view of their names and thus detailed descriptions thereof will be omitted herein.

The output unit (output interface) 14 may output information about the state of the aerosol-generating device 1 and may provide the information to the user. The output unit 14 may include at least one of a display 141, a haptic unit 142, and a sound output unit 143, but embodiments are not limited thereto. When the display 141 forms a layer structure together with a touch pad to construct a touch screen, the display 141 may be used as an input device as well as an output device.

The display 141 may visually provide information about the aerosol-generating device 1 to the user. For example, the information about the aerosol-generating device 1 may refer to various pieces of information, such as the charging/discharging state of the battery 11 of the aerosol-generating device 1, a preheating state of the heater 18, an insertion/removal state of the stick S and/or the cartridge 19, a mounting/removal state of the cap, or a state in which use of the aerosol-generating device 1 is limited (e.g., detection of an abnormal article), and the display 141 may output the information to the outside. For example, the display 141 may have a shape of a light-emitting diode (LED). For example, the display 141 may be a liquid crystal display (LCD), an organic light-emitting display (OLED) panel, or the like.

The haptic unit 142 may convert an electrical signal into a mechanical stimulus or electrical stimulus and may tactually provide information about the aerosol-generating device 1 to the user. For example, when initial power is supplied to the cartridge heater 24 and/or the heater 18 for a set time, the haptic unit 142 may generate vibration corresponding to completion of initial preheating. The haptic unit 142 may include a motor, a piezoelectric element, and/or an electrical stimulation device.

The sound output unit 143 may acoustically provide the information about the aerosol-generating device 1 to the user. For example, the sound output unit 143 may convert the electrical signal into a sound signal and may output the sound signal to the outside.

The battery 11 may supply power used to operate the aerosol-generating device 1. The battery 11 may supply power so that the cartridge heater 24 and/or the heater 18 may be heated. In addition, the battery 11 may supply power required for operations of the sensor 13, the output unit 14, the input unit 15, the communication unit 16, and the memory 17, which are other components provided in the aerosol-generating device 1. The battery 11 may be a rechargeable power source or a disposable power source. For example, the battery 11 may be a lithium polymer (LiPoly) battery, but embodiments are not limited thereto.

The battery 11 may be a removable type (detachable or separable) power source. The battery 11 includes an electrical contact portion, and when the battery 11 is mounted in the aerosol-generating device 1, the electrical contact portion of the battery 11 may be implemented to be electrically connected to an electrical contact portion provided in the aerosol-generating device 1 to supply power to the aerosol-generating device 1. As another example, the battery 11 may include a charging coil for supplying power to the aerosol-generating device 1 in a wireless charging manner instead of a separate electrical contact portion. That is, the power supply method of the battery 11 may vary, and the electrical connection method of the battery 11 and the aerosol-generating device 1 may vary depending on the power supply method supported by the battery 11.

The detachable battery 11 may include a charger interface that may be connected to an external charger. Power for charging the detachable battery 11 may be provided to the battery 11 through the charger interface. The battery 11 may be charged by the external charger while being coupled to the aerosol-generating device 1 or while being separated from the aerosol-generating device 1.

Although not shown in FIG. 9, the aerosol-generating device 1 may further include a battery protection circuit. The battery protection circuit may be electrically connected to the battery 11 and may include a switching element.

The battery protection circuit may cut off an electric path for the battery 11 according to certain conditions. For example, when a voltage level of the battery 11 is greater than or equal to a first voltage corresponding to overcharging, the battery protection circuit may cut off the electric path for the battery 11. For example, when a voltage level of the battery 11 is less than a second voltage corresponding to overdischarging, the battery protection circuit may cut off the electric path for the battery 11.

The heater 18 may heat a medium or an aerosol-generating material in the stick S by receiving power from the battery 11. Although not shown in FIG. 9, the aerosol-generating device 1 may further include a power conversion circuit (e.g., a DC/DC converter) for converting power of the battery 11 to supply the converted power to the cartridge heater 24 and/or the heater 18. In addition, when the aerosol-generating device 1 generates aerosol by using an induction heating method, the aerosol-generating device 1 may further include a DC/AC converter that converts direct current power of the battery 11 into alternating current power.

The controller 12, the sensor 13, the output unit 14, the input unit 15, the communication unit 16, and the memory 17 may perform functions by receiving power from the battery 11. Although not shown in FIG. 9, the aerosol-generating device 1 may further include a power conversion circuit for converting the power of the battery 11 to supply the converted power to components, for example, a low dropout (LDO) circuit or a voltage regulator circuit. Although not shown in FIG. 9, a noise filter may be provided between the battery 11 and the heater 18. The noise filter may be a low pass filter. The low pass filter may include at least one inductor and a capacitor. A cutoff frequency of the low pass filter may correspond to a frequency of a radio frequency switching current applied from the battery 11 to the heater 18. Radio frequency noise components may be prevented from being applied to the sensor 13, such as the insertion detection sensor 133, by the low pass filter.

According to an embodiment, the cartridge heater 24 and/or the heater 18 may be formed of an arbitrary proper electric resistance material. For example, the proper electric resistance material may be metal or metal alloy including titanium, zirconium, tantalum, platinum, nickel, cobalt, chromium, hafnium, niobium, molybdenum, tungsten, tin, gallium, manganese, iron, copper, stainless steel, nichrome, etc., but embodiments are not limited thereto. Also, the heater 18 may be implemented using a metal heating wire, a metal heating plate on which an electric conductive track is disposed, a ceramic heating body, or the like, but embodiments are not limited thereto.

According to another embodiment, the heater 18 may be a heater using an induction heating method. For example, the heater 18 may include a susceptor that generates heat by a magnetic field applied by the coil and heats the aerosol-generating material.

The input unit (input interface) 15 may receive information input from the user or may output the information to the user. For example, the input unit 15 may be a touch panel. The touch panel may include at least one touch sensor that detects touch. For example, the touch sensor may include a capacitive touch sensor, a resistive touch sensor, a surface acoustic wave touch sensor, an infrared touch sensor, or the like, but embodiments are not limited thereto.

The display 141 and the touch panel may be implemented as one panel. For example, the touch panel may be inserted (on-cell type or in-cell type) into the display 141. For example, the touch panel may be added on (add-on type) the display panel.

The input unit 15 may include a button, a key pad, a dome switch, a jog wheel, a jog switch, or the like, but embodiments are not limited thereto.

The memory 17 is hardware for storing various kinds of data processed in the aerosol-generating device 1, and may store pieces of data that have been processed and are to be processed by the controller 12. The memory 17 may include at least one type of storage medium selected from among a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), magnetic memory, a magnetic disk, and an optical disk. The memory 17 may store data about the operating time of the aerosol-generating device 1, a maximum number of puffs, a current number of puffs, at least one temperature profile, and the user's smoking pattern.

The communication unit (communication interface, communicator) 16 may include at least one component for communication with other electronic devices. For example, the communication unit 16 may include at least one of a short-range wireless communication unit and a wireless communication unit.

Examples of the short-range wireless communication unit may include, but are not limited to, a Bluetooth communication unit, a Bluetooth Low Energy (BLE) communication unit, a near field communication (NFC) unit, a wireless local area network (WLAN) (e.g., Wi-Fi) communication unit, a ZigBee communication unit, an infrared Data Association (IrDA) communication unit, a Wi-Fi direct (WFD) communication unit, an ultra wideband (UWB) communication unit, and an Ant+ communication unit.

The wireless communication unit may include a cellular network communication unit, an Internet communication unit, a computer network (e.g., a LAN or a WAN) communication unit, or the like, but embodiments are not limited thereto.

Although not shown in FIG. 9, the aerosol-generating device 1 may further include a connection interface, such as a universal serial bus (USB) interface, and may transmit/receive information by being connected to another external device through the connection interface, such as a USB interface, or may charge the battery 11.

The controller 12 may control overall operations of the aerosol-generating device 1. According to an embodiment, the controller 12 may include at least one processor. The processor may be implemented by an array of a plurality of logic gates, or may be implemented by a combination of a general-use microprocessor and a memory in which a program executable by the general-use microprocessor is stored. It will also be understood by one of ordinary skill in the art to which the present embodiment pertains that the processor may be implemented by other types of hardware.

The controller 12 may control supplying of the power of the battery 11 to the heater 18, thereby controlling the temperature of the heater 18. The controller 12 may control the temperature of the cartridge heater 24 and/or the heater 18, based on the temperature of the cartridge heater 24 and/or the heater 18 sensed by the temperature sensor 131. The controller 12 may control power supplied to the cartridge heater 24 and/or the heater 18, based on the temperature of the cartridge heater 24 and/or the heater 18. For example, the controller 12 may determine a target temperature of the cartridge heater 24 and/or the heater 18, based on a temperature profile stored in the memory 17.

The aerosol-generating device 1 may include a power supply circuit (not shown) electrically connected to the battery 11 between the battery 11 and the cartridge heater 24 and/or the heater 18. The power supply circuit may be electrically connected to the cartridge heater 24, the heater 18, or an induction coil 181. The power supply circuit may include at least one switching element. The switching element may be implemented by a bipolar junction transistor (BJT), a field effect transistor (FET), or the like. The controller 12 may control the power supply circuit.

The controller 12 may control switching of the switching element of the power supply circuit, thereby controlling the supply of power. The power supply circuit may be an inverter that converts direct current power output by the battery 11 into alternating current power. For example, the inverter may include a full-bridge circuit or half-bridge circuit including a plurality of switching elements.

The controller 12 may turn on the switching element so that power may be supplied from the battery 11 to the cartridge heater 24 and/or the heater 18. The controller 12 may turn off the switching element so that the supply of power to the cartridge heater 24 and/or the heater 18 may be cut off. The controller 12 may adjust a current supplied by the battery 11 by adjusting a frequency and/or duty ratio of a current pulse input to the switching element.

The controller 12 may control a voltage output by the battery 11 by controlling switching of the switching element of the power supply circuit. The power conversion circuit may convert the voltage output by the battery 11. For example, the power conversion circuit may include a Buck-converter that drops the voltage output by the battery 11. For example, the power conversion circuit may be implemented through a Buck-boost converter, a Zener diode, etc.

The controller 12 may adjust the level of the voltage output by the power conversion circuit by controlling an on/off operation of the switching element included in the power conversion circuit. When an on state of the switching element is continued, the level of the voltage output by the power conversion circuit may correspond to the level of the voltage output by the battery 11. A duty ratio with respect to the on/off operation of the switching element may correspond to a ratio of the voltage output by the power conversion circuit to the voltage output by the battery 11. As the duty ratio with respect to the on/off operation of the switching element is decreased, the level of the voltage output by the power conversion circuit may be reduced. The heater 18 may be heated based on the voltage output by the power conversion circuit.

The controller 12 may control power to be supplied to the heater 18, by using at least one method of a pulse width modulation (PWM) method and a proportional-integral-differential (PID) method.

For example, the controller 12 may control supply of a current pulse having a certain frequency and a duty ratio, by using the PWM method. The controller 12 may control power supplied to the heater 18 by adjusting the frequency and duty ratio of the current pulse.

For example, the controller 12 may determine a target temperature that is a target of control, based on the temperature profile. The controller 12 may control the power supplied to the heater 18 by using a PID method, which is a feedback control method using a difference value between the temperature of the heater 18 and the target temperature thereof, a value obtained by integrating the difference value according to the flow of time, and a value obtained by differentiating the difference value according to the flow of time.

The controller 12 may prevent the cartridge heater 24 and/or the heater 18 from being overheated. For example, the controller 12 may control an operation of the power conversion circuit so that the supply of the power to the cartridge heater 24 and/or the heater 18 is stopped, based on the temperature of the cartridge heater 24 and/or the heater 18 exceeding a preset limit temperature. For example, the controller 12 may reduce the amount of power supplied to the cartridge heater 24 and/or the heater 18, based on the temperature of the cartridge heater 24 and/or the heater 18 exceeding the preset limit temperature. For example, the controller 12 may determine that the aerosol-generating material accommodated in the cartridge 19 is exhausted, based on the temperature of the cartridge heater 24 exceeding the limit temperature, and may cut off the supply of power to the cartridge heater 24.

The controller 12 may control charging/discharging of the battery 11. The controller 12 may check the temperature of the battery 11, based on an output signal of the temperature sensor 131.

When a power wire is connected to a battery terminal of the aerosol-generating device 1, the controller 12 may check whether the temperature of the battery 11 is greater than or equal to a first limit temperature that is a basis for blocking charging of the battery 11. When the temperature of the battery 11 is less than the first limit temperature, the controller 12 may control the battery 11 to be charged, based on a preset charging current. When the temperature of the battery 11 is equal to or greater than the first limit temperature, the controller 12 may block charging of the battery 11.

When power of the aerosol-generating device 1 is in an on state, the controller 12 may check whether the temperature of the battery 11 is greater than or equal to a second limit temperature that is a basis for cutting off discharging of the battery 11. When the temperature of the battery 11 is less than the second limit temperature, the controller 12 may control the power stored in the battery 11 to be used. When the temperature of the battery 11 is greater than or equal to the second limit temperature, the controller 12 may stop using the power stored in the battery 11.

The controller 12 may calculate the remaining capacity of the power stored in the battery 11. For example, the controller 12 may calculate the remaining capacity of the battery 11, based on a voltage and/or current sensing value of the battery 11.

The controller 12 may determine whether the stick S is inserted into the insertion space, through the insertion detection sensor 133. The controller 12 may determine that the stick S is inserted, based on an output signal of the insertion detection sensor 133. When it is determined that the stick S is inserted into the insertion space, the controller 12 may control power to be supplied to the cartridge heater 24 and/or the heater 18. For example, the controller 12 may supply power to the cartridge heater 24 and/or the heater 18, based on the temperature profile stored in the memory 17.

The controller 12 may determine whether the stick S is removed from the insertion space. For example, the controller 12 may determine whether the stick S is removed from the insertion space, through the insertion detection sensor 133. For example, when the temperature of the heater 18 is greater than or equal to the limit temperature or when a temperature change slope of the heater 18 is equal to or greater than a set slope, the controller 12 may determine that the stick S is removed from the insertion space. When it is determined that the stick S has been removed from the insertion space, the controller 12 may block supply of power to the cartridge heater 24 and/or the heater 18.

The controller 12 may control a power supply time and/or a power supply amount for the heater 18 according to the state of the stick S detected by the sensor 13. The controller 12 may check a level range in which the level of a signal of a capacitance sensor is included, based on a lookup table. The controller 12 may check a moisture amount for the stick S according to the checked level range.

When the stick S is in an overwatering state, the controller 12 may control the power supply time for the heater 18 to thereby increase the preheating time of the stick S rather than when the stick S is in a general state.

The controller 12 may determine whether the stick S inserted into the insertion space is reused, through the reuse detection sensor 134. For example, the controller 12 may compare a sensing value of a signal of the reuse detection sensor with a first reference range in which a first color is included, and may determine that the stick S is not used when the sensing value is included in the first reference range. For example, the controller 12 may compare the sensing value of the signal of the reuse detection sensor with a second reference range in which a second color is included, and may determine that the stick S is used when the sensing value is included in the second reference range. When it is determined that the stick S is used, the controller 12 may block supply of power to the cartridge heater 24 and/or the heater 18.

The controller 12 may determine whether the cartridge 19 is combined and/or removed, through the cartridge detection sensor 135. For example, the controller 12 may determine whether the cartridge 19 is combined or removed, based on the sensing value of a signal of the cartridge detection sensor.

The controller 12 may determine whether the aerosol-generating material of the cartridge 19 is exhausted. For example, the controller 12 may preheat the cartridge heater 24 and/or the heater 18 by applying power, may determine whether the temperature of the cartridge heater 24 exceeds the limit temperature in a preheating section, and, when the temperature of the cartridge heater 24 exceeds the limit temperature, may determine that the aerosol-generating material of the cartridge 19 is exhausted. When it is determined that the aerosol-generating material of the cartridge 19 is exhausted, the controller 12 may cut off the supply of power to the cartridge heater 24 and/or the heater 18.

The controller 12 may determine whether use of the cartridge 19 is possible. For example, the controller 12 may determine that the use of the cartridge 19 is not possible if a current puff frequency is greater than or equal to a maximum puff frequency set in the cartridge 19, based on data stored in the memory 17. For example, when a total time period during which the heater 24 is heated is greater than or equal to a preset maximum time period or a total amount of power supplied to the cartridge heater 24 is greater than or equal to a preset maximum power amount, the controller 12 may determine that the use of the cartridge 19 is not possible.

The controller 12 may perform determination on the user's inhaling through the puff sensor 132. For example, the controller 12 may determine whether a puff occurs, based on a sensing value of a signal of the puff sensor. For example, the controller 12 may determine the intensity of the puff, based on the sensing value of the signal of the puff sensor 132. When the puff frequency reaches the preset maximum puff frequency or puffs are not sensed for a preset time period or more, the controller 12 may cut off the supply of power to the cartridge heater 24 and/or the heater 18.

The controller 12 may determine whether the cap is combined and/or removed, through the cap detection sensor 136. For example, the controller 12 may determine whether the cap is combined or removed, based on a sensing value of a signal of the cartridge detection sensor.

The controller 12 may control the output unit 14, based on a result of the sensing performed by the sensor 13 For example, when the number of puffs counted by the puff sensor 132 reaches a preset number, the controller 12 may notify the user in advance that the aerosol-generating device 1 is ended soon, through at least one of the display 141, the haptic unit 142, and the sound output unit 143. For example, the controller 12 may notify the user through the output unit 14, based on a determination that the stick S is not present in the insertion space. For example, the controller 12 may notify the user through the output unit 14, based on a determination that the cartridge 19 and/or the cap is not mounted. For example, the controller 12 may transmit information about the temperature of the cartridge heater 24 and/or the heater 18 to the user through the output unit 14.

The controller 12 may store and update a history of an event occurred in the memory 17, based on certain event occurrence. The event may include insertion detection of the stick S, heating start of the stick S, puff detection, puff end, overheat detection of the cartridge heater 24 and/or the heater 18, detection of overvoltage application to the cartridge heater 24 and/or the heater 18, heating end of the stick S, an operation such as power on/off of the aerosol-generating device 1, charging start of the battery 11, detection of overcharging of the battery 11, and charging end of the battery 11, which are performed by the aerosol-generating device 1. The history of the event may include, for example, a date and time of the event, log data corresponding to the event. For example, when a predetermined event is insertion detection of the stick S, log data corresponding to the event may include data for the sensing value, etc. of the insertion detection sensor 133. For example, when the predetermined event is overheating detection of the cartridge heater 24 and/or the heater 18, the log data corresponding to the event may include data about, for example, the temperature of the cartridge heater 24 and/or heater 18, the voltage applied to the cartridge heater 24 and/or the heater 18, and a current flowing through the cartridge heater 24 and/or the heater 18.

The controller 12 may control a communication link to be formed with an external device, such as the user's mobile terminal. When receiving data on authentication from an external device through the communication link, the controller 12 may remove limitation of the use of at least one function of the aerosol-generating device 1. The data on authentication may include data indicating completion of user authentication with respect to a user corresponding to the external device. The user may perform user authentication through the external device. The external device may determine whether user data is valid, based on the user's birthday and a unique number representing the user, and may receive data about use authority of the aerosol-generating device 1 from an external server. The external device may transmit data indicating the completion of the user authentication to the aerosol-generating device 1, based on the data about the use authority. When the user authentication is completed, the controller 12 may remove limitation of the use of the at least one function of the aerosol-generating device 1. For example, when the user authentication is completed, the controller 12 may_remove the limitation of the use of a heating function of supplying power to the heater 18.

The controller 12 may transmit data on the state of the aerosol-generating device 1 to the external device through the communication link formed with the external device. Based on the received state data, the external device may output the remaining capacity, the operation mode, etc. of the battery 11 of the aerosol-generating device 1 through a display of the external device.

The external device may transmit a position search request to the aerosol-generating device 1, based on an input of starting a position search of the aerosol-generating device 1. When receiving a position search request from the external device, the controller 12 may control at least one of output devices to perform an operation corresponding to a position search, based on the received position search request. For example, the haptic unit 142 may generate vibration in response to the position search request. For example, in response to the position search request, the display 141 may output an object that corresponds to position search and search end.

The controller 12 may control firmware update to be performed, when receiving firmware data from the external device. The external device may check a current version of the firmware of the aerosol-generating device 1 and determine whether a new version of the firmware is present. When receiving an input of requesting for firmware download, the external device may receive the new version of the firmware data and transmit the new version of the firmware data to the aerosol-generating device 1. As the controller 12 receives the new version of the firmware data, the controller 12 may control the firmware update of the aerosol-generating device 1 to be performed.

The controller 12 may transmit data on a sensing value of the at least one sensor 13 to an external server (not shown) through the communication unit 16, and may receive and store a learning model generated by learning sensing values from a server through machine learning, such as deep learning. The controller 12 may perform, for example, an operation of determining the user's inhaling pattern and an operation of generating a temperature profile, by using the learning model received from the server. The controller 12 may store, for example, sensing value data of the at least one sensor 13 and data for training an artificial neural network (ANN) in the memory 17. For example, the memory 17 may store a database for each component provided in the aerosol-generating device 1, a weight that forms an ANN structure, and biases, which are for training the ANN. The controller 12 may learn data on a sensing value of at least one sensor 13, the user's inhaling pattern, the temperature profile, etc. stored in the memory 17, and may generate at least one learning model used for, for example, determination of the user's inhaling pattern, generation of the temperature profile.

Certain embodiments or other embodiments of the present disclosure described above are not exclusive or distinct from each other. The certain embodiments or other embodiments of the present disclosure described above may be combined with each other or used in combination with each other in their respective components or functions.

For example, it means that an A component described in a specific embodiment and/or the drawings and a B component described in another embodiment and/or the drawings may be combined with each other. In other words, even when it is not explained directly about combination between components, it is possible to combine unless it is explained that combination is impossible.

The above detailed description should not be interpreted restrictedly but should be considered illustrative in all aspects. The scope of the present disclosure should be determined by a rational interpretation of the attached claims, and all changes within the equivalent scope of the present disclosure are included in the scope of the present disclosure.

## Claims

1. An aerosol-generating device comprising:
a body including an accommodation space for accommodating an aerosol-generating article;
a heater configured to heat the aerosol-generating article accommodated in the accommodation space;
a battery that moves in a direction to be inserted into the body while rotating with respect to the body and is detachably coupled to the body; and
an airflow passage through which air moves along a space between the body and the battery coupled to the body.

2. The aerosol-generating device of claim 1, further comprising:
a protruding portion arranged on any one of the battery and the body; and
a guide groove arranged on another one of the battery and the body, extending along a rotating direction of the battery for the protruding portion to be inserted in the guide groove, and arranged to be inclined towards a length direction of the battery.

3. The aerosol-generating device of claim 2, wherein
an area of the protruding portion is smaller than an area of the guide groove in a cross-sectional view of the battery in the length direction.

4. The aerosol-generating device of claim 2, wherein
the protruding portion is arranged on an outer surface of the battery and the guide groove is arranged on an inner surface of the body, and
the aerosol-generating device further comprises a stopper in contact with a front end portion of the battery and restricting a moving range of the protruding portion.

5. The aerosol-generating device of claim 1, wherein
the battery comprises a step portion located at a rear end portion of the battery and restricting movement of the battery with respect to the body.

6. The aerosol-generating device of claim 5, wherein
the battery further comprises an inlet hole arranged at the step portion of the battery and introducing external air.

7. The aerosol-generating device of claim 1, wherein
the body further comprises a coupling space for accommodating the battery, and
the coupling space is in fluid communication with the accommodation space.

8. The aerosol-generating device of claim 7, wherein
the accommodation space and the coupling space are open in opposite directions, and
the airflow passage is arranged to extend along the coupling space and the accommodation space from outside of the aerosol-generating device.

9. The aerosol-generating device of claim 7, further comprising
a receiving terminal protruding towards the coupling space,
wherein the battery comes into contact with the receiving terminal when the battery rotates with respect to the body and moves in a length direction of the battery.

10. The aerosol-generating device of claim 1, wherein
the battery comprises an insertion groove arranged at an end portion of the battery and transferring operating force applied by a user to separate the battery coupled to the body from the body.

11. The aerosol-generating device of claim 1, further comprising
a cover arranged at an end portion of the battery to protect the battery coupled to the body.

12. The aerosol-generating device of claim 11, wherein
the body further comprises a guide arranged inside the cover to be coupled to the cover and engaged with the cover for coupling.

13. The aerosol-generating device of claim 11, wherein
the cover comprises a first airflow hole for introducing external air.

14. The aerosol-generating device of claim 11, wherein
the battery comprises a convex portion protruding outside the body when the battery is inserted into the body, and
the aerosol-generating device further comprises a pressing member coming into contact with the convex portion and pressing the battery towards the body.

15. The aerosol-generating device of claim 14, wherein
the pressing member comprises a contact portion including a second airflow hole for movement of air and coming into contact with the convex portion, and an elastic portion arranged between the cover and the contact portion and pressing the contact portion towards the convex portion.
